# EUROPÄISCHE PATENTSCHRIFT

(11) **EP 3 251 749 B1**
(45) Veröffentlichungstag und Bekanntmachung des Hinweises auf die Patenterteilung: **14.08.2024**
(21) Anmeldenummer: 16172395.2
(22) Anmeldetag: 01.06.2016
(51) Int. Cl.: B02C 4/42, B02C 13/30, B02C 18/14, B02C 18/24

(54) **MOBILE ABFALLZERKLEINERUNGSVORRICHTUNG MIT SERIELLEM HYBRIDANTRIEB**
MOBILE WASTE SHREDDING DEVICE WITH SERIAL HYBRID DRIVE
BROYEUR DE DECHETS MOBILE DOTE D'UN ENTRAINEMENT HYBRIDE EN SERIE

(43) Veröffentlichungstag der Anmeldung: 06.12.2017
(73) Patentinhaber: Lindner, Manuel, 9800 Spittal/Drau (AT)
(72) Erfinder: LINDNER, Manuel, 9800 Spittal/Drau (AT); SCHIFFER, Peter, 9872 Millstatt (AT)
(74) Vertreter: Grünecker Patent- und Rechtsanwälte PartG mbB

(56) Entgegenhaltungen:
- WO-A1-2014/039603
- US-A1- 2011 240 778
- US-A1- 2012 234 949
- US-A1- 2013 313 351

## Beschreibung

### Gebiet der Erfindung

Die Erfindung betrifft eine mobile Zerkleinerungsvorrichtung mit wenigstens einer Zerkleinerungswelle, einem Verbrennungsmotor und einem mit dem Verbrennungsmotor gekoppelten Generator zur Umwandlung von mechanischer Energie des Verbrennungsmotors in elektrische Energie, und wenigstens einem Elektromotor zur Umwandlung der elektrischen Energie in mechanische Energie zum Antrieb der Zerkleinerungswelle, ohne und mit Unterstützung eines elektrischen oder mechanischen Energiespeichers.

### Stand der Technik

Bei Zerkleinerungs- und Aufbereitungsmaschinen (Shredder) für verschiedene Inputmaterialien (wie beispielsweise Gewerbemüll, Industrieabfall, Elektronikschrott, Metallschrott, Kunststoff, Verbundstoffe, Gummi, Holz) werden häufig mobile Maschinen z.B. mit Straßenzulassung eingesetzt. Die mobilen Zerkleinerungsmaschinen finden üblicher Weise für wechselnde Einsatzorte ihre Verwendung. Diese Zerkleinerungsmaschinen haben eine oder mehrere angetriebene Zerkleinerungswellen mit welcher das Inputmaterial zerkleinert wird.

Eine derartige Vorrichtung ist aus US 2013/313351 A1 bekannt.

Gegenüber den stationären Zerkleinerungsmaschinen ist es bei den mobilen Maschinen üblich, dass diese autark, ohne fremden Energieanschluss funktionieren. Wegen des zumeist fehlenden Energieanschlusses (z.B. elektrischer Anschluss) ist es also notwendig, dass diese Maschinen mit einem eigenen Energielieferanten (vorzugsweise ein Dieselmotor) ausgestattet sind.

Der Dieselmotor (Industriedieselmotor) liefert eine Drehzahl im Bereich von z.B. 1500-2100 U/min. Damit diese Drehzahl an die zumeist deutlich niedrigere Zerkleinerungswellendrehzahl von bis zu z.B. 1000 U/min. angepasst werden kann und auch eine einfach durchzuführende Drehrichtungsänderung möglich ist, wird üblicher Weise ein "hydraulisches Getriebe" eingesetzt. Beispiele für üblicherweise eingesetzte Wellenumdrehungszahlen sind von 10 bis zu 80 U/min bei einer Zweiwellenzerkleinerungsmaschine; 5 bis 200 bzw. 90 bis 500 U/min bei einer Einwellenzerkleinerungsmaschine und 9 bis 800 U/min bei einer (Vertikal-) Mühle.

In allen folgenden Beschreibungen, sowohl zum Stand der Technik wie auch der Beschreibung der Erfindung, werden zur Vereinfachung jeweils nur eine Komponente des Systems angeführt. Natürlich können jeweils zwei oder mehrere Komponenten im System vorhanden sein oder vorgesehen werden. So wird immer z.B. eine Zerkleinerungswelle oder Generator oder Elektromotor angeführt. Je nach Zerkleinerungssystem können es auch zwei oder mehr Zerkleinerungswellen sein. Auch hinsichtlich der Antriebskomponenten, können es z.B. auch mehrere Verbrennungsmotoren, Generatoren, Elektromotoren oder Energiespeicher und andere mehrfache Komponenten sein.

Von einem hydraulischen Antrieb spricht man, wenn über eine oder mehrere Hydraulikpumpen (am Dieselmotor direkt, oder über Verteilergetriebe angeflanscht), welche dann ihrerseits einen oder mehrere Hydraulikmotoren an der oder an den Zerkleinerungswellen direkt oder über ein Vorsatzgetriebe antreibt. Sowohl die Pumpe wie der Motor sind überwiegend als Axialschwenkpumpe bzw. -motor ausgeführt, welches zwangsläufig mit einer starken Geräuschentwicklung verbunden ist. Mit dieser Konstellation kann einfach die gewünschte Variabilität der Zerkleinerungswellendrehzahl Wellendrehrichtung und dem Wellendrehmoment erreicht werden.

Bei den Zerkleinerern mit dem hier beschriebenen hydrostatischen Antrieb wird überwiegend die Drehzahl der Zerkleinerungswelle druckabhängig dergestalt geregelt, dass der Hydraulikmotor, mit der höchstmöglichen Drehzahl in Proportion zu dem für die Zerkleinerung erforderlichen Drehmoment betrieben wird. Dies ist deshalb erforderlich, dass mit einem so angetriebenen Zerkleinerungssystem, die höchstmögliche Durchsatzleistung erreicht wird.

Beim Erreichen eines bestimmten vorgegebenen hydraulischen Drucks am Hydraulikmotor, wenn also das für die Zerkleinerung erforderlich Drehmoment nicht mehr ausreicht und der Druck dadurch ansteigt, wird die Drehzahl der Welle kontinuierlich abgesenkt und so das Drehmoment bei gleichem Druck entsprechend proportional erhöht. Entweder bis eine bestimmte Minimaldrehzahl erreicht ist, oder wenn es trotz Zurücknahme der Drehzahl und somit der Erhöhung des Drehmoments, doch zu einem Stillstand, also Blockade der Welle kommt.

Bei Verringerung des für Zerkleinerung erforderlichen Druck, und somit Drehmoment, wird die Drehzahl der Welle, kontinuierlich wieder bis zum Erreichen eine vorbestimmten Druckes erhöht.

Für sehr hohe Drehmomente können zur Kosteneffizienz die hydraulischen Antriebskomponenten auch sehr klein mit hohen Drehzahlen ausgelegt werden, und die gewünschte Zerkleinerungswellendrehzahl und das gewünschte Zerkleinerungswellendrehmoment können dann über ein Vorsatzgetriebe (Untersetzungsgetriebe zwischen hydraulischen Antrieb und Zerkleinerungswelle) erreicht werden.

Systembedingt ergibt sich jedoch bei der Energieeffizienz von hydraulischen Antrieben ein schlechter Gesamtwirkungsgrad von ca. 0,14 bis 0,24, unter der folgender beispielhaften, aber typischen Annahme: Wirkungsgrad des Dieselmotor 0,35 bis 0,4 und Wirkungsgrad des Hydraulikantriebs mit Teillastanteil von 0,4 bis 0,6 je nach Anteil des Voll- oder Teillastbetriebs.

Dieser schlechte Wirkungsrad des hydrostatischen Systems bedeutet aber auch, dass zur Wärmeabfuhr größere Kühleinheiten vorzusehen sind, die zusätzlich Energie für den Antrieb der dazu erforderlichen Lüfter erfordert, wodurch der Wirkungsgrad nochmals verschlechtert wird.

Ein wesentliches Merkmal dieser hier beschriebenen hydrostatischen Antriebe ist noch, dass sie über keine Möglichkeit der ganz kurz andauernden Leistungserhöhung verfügen, da mit dem Erreichen eines maximal vorgegeben Druck und minimaler Drehzahl, also maximalem Drehmoment, die Leistungsmöglichkeit eines solchen Systems erschöpft ist.

Bei den hier beschriebenen Zerkleinerungsvorgängen treten jedoch Belastungsspitzen im kleinen Millisekunden (ms)-Bereich auf, die das hier beschriebene hydrostatische Antriebssystem nicht abdecken kann.

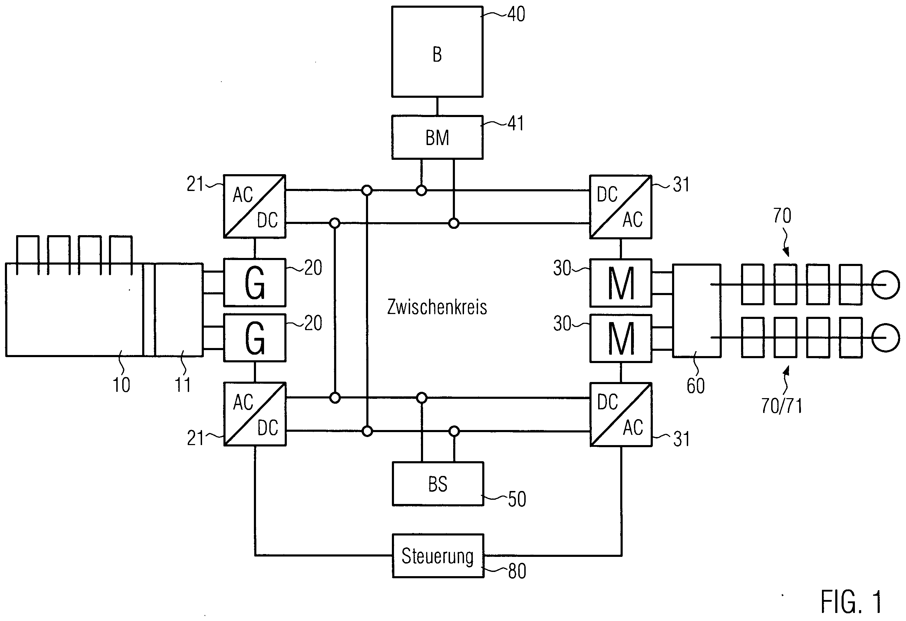

Die Fig. 1 zeigt in einem Messdiagramm die in kurzen Abständen stark wechselnden Drehmomente eines solchen Zerkleinerungsprozesses und die daraus resultierenden erforderliche raschen Änderungen der Drehzahl der Zerkleinerungswelle.

Wenn das für die Zerkleinerung erforderliche Drehmoment trotz der Verringerung der Drehzahl der Welle nicht ausreicht, kommt es zur Blockade der Zerkleinerungswelle.

Um den Zerkleinerungsvorgang fortsetzen zu können, wird an der Welle für einen kurzen Zeitraum die Drehrichtung geändert, also ein Reversiervorgang durchgeführt, und dann der normale Zerkleinerungsvorgang wieder fortgesetzt.

Dem könnte nur dadurch begegnet werden, dass die Leistungsfähigkeit dieses hydrostatischen Systems durch Vergrößerung der Pumpe und des Motors so vergrößert wird, dass im normalen Zerkleinerungsprozess nur ein Teil der Leistung genutzt wird, damit dadurch beim Erreichen solchen Leistungsspitzen, ein zusätzliche unmittelbar abrufbare Leistungsreserve zur Verfügung steht.

Eine solche Lösung verbietet sich zunächst wegen der dadurch erforderlichen höheren Kosten, und dem höheren Gewicht bei mobilen Zerkleinerern, wie auch wegen der weiteren Verschlechterung des Wirkungsgrades, da ein so ausgeführtes hydrostatisches Antriebssystem, überwiegend nur im Teillastbereich betrieben würde.

Die durch solche Leistungsspitzen hervorgerufenen Blockaden der Zerkleinerungswelle und so erzwungenen Reversiervorgängen der Welle, mindert jedoch die Durchsatzleistung eines so hydrostatisch angetriebenen Zerkleinerers.

Dazu kommt noch, dass ein so angetriebenes hydrostatisches System an Zerkleinerungsvorrichtungen in den Reaktionen der Drehzahl- und somit der Drehmomentänderungen auch innerhalb der Leistungsgrenze des Systems sehr träge ist.

Wenn also in kurzen Abständen eine Minderung der Drehzahl zur Erhöhung des Drehmoments erforderlich ist, dann aber kurzfristig ein Erhöhung der Drehzahl möglich und zum Erreichen eines möglichst großen Durchsatz erforderlich ist, kann das Regelsystem eines solchen hydrostatischen Antriebs nur sehr träge folgen, was abermals zu Lasten der Durchsatzleistung geht.

Nicht zu verkennen ist auch eine mögliche Umweltbeeinträchtigung durch Verunreinigung von Böden, bei Undichtheit des hydraulischen Systems, oder bei dessen Störungen.

Mobile Zerkleinerungsmaschinen werden also standardmäßig mit einem Dieselmotor als Energielieferanten betrieben. Im Markt der mobilen Zerkleinerungsmaschinen hat sich derzeit überwiegend die technische Lösung mit einem hydraulischen Antrieb trotz vieler Nachteile als kostengünstig etabliert, der den Dieselmotor an den hydraulischen Antrieb (Hydraulikpumpe(n) und Hydraulikmotor koppelt und wahlweise ein Vorsatzgetriebe aufweist. Mobile Zerkleinerungsmaschinen in dieser Ausführung sind sehr betriebssicher und aus dem Stand der Technik bekannt. Für die unterschiedlichen Anwendungen bei mobilen Zerkleinerungsmaschinen werden verschiedene Ausführungen von dieselhydraulischen Antrieben verbaut.

Nunmehr gibt es auch erstmalig Prototypen an Zerkleinerungstechnik, z.B. für Holz um sogenanntes Hackgut herzustellen, und zum Brechen von Gestein und Beton. Dabei wird die Hydraulikpumpe am Diesel- oder Verbrennungsmotor durch einen Generator zur Erzeugung elektrischer Energie ersetzt. Die so erzeugte elektrische Energie wird dann von einem Elektromotor wieder in mechanische Energie zum Antrieb der Zerkleinerungswerkzeuge umgewandelt. Diese Zerkleinerungsaggregate werden jedoch systembedingt nur mit einer nahezu konstanten Drehzahl betrieben. Es gibt nur sehr geringe Drehzahlschwankungen zwischen dem Leerlauf und dem Betrieb solcher Zerkleinerer.

Bei diesen elektrischen Antrieben gibt es keine Reduzierung der Drehzahl zur Erhöhung des Drehmoments, wie es bei den hier weiter vorne beschriebenen hydrostatischen Antrieben und dem weiter hinten beschriebenen neuen erfindungsgemäßen Antrieb erfolgt. Das ist bei diesen Zerkleinerungsaggregaten technisch auch nicht möglich, denn dadurch wäre der eigentliche Zerkleinerungsvorgang nicht durchführbar.

Die elektrischen Antriebe für Zerkleinerungsmaschinen zur Herstellung von Hackgut aus Holz oder zum Brechen von Gestein und Beton haben auch nur eine Drehrichtung der Zerkleinerungswerkzeuge, und benötigen keine andere Drehrichtung, und können systembedingt auch die Drehrichtung nicht ändern. Jedoch bei den erfindungsgemäßen elektrischen Antrieben, ist eine Änderung der Drehrichtung möglich und erforderlich.

Die bei diesen Zerkleinerungsaggregaten zum Einsatz kommenden Energiespeicher in Form von Kondensatoren, sogenannte SuperCAPS, dienen hier nicht zur Beeinflussung der Drehzahl, sondern sind zur ganz kurzfristigen Abdeckung von Leistungsspitzen vorgesehen, denen der Dieselantrieb bedingt durch seine Trägheit nicht folgen kann.

### Beschreibung der Erfindung

Aufgabe der Erfindung ist es, eine energetisch effizientere mobile Abfallzerkleinerungsvorrichtung bereitzustellen.

Die Aufgabe wird gelöst durch eine mobile Abfallzerkleinerungsvorrichtung nach

Patentanspruch 1. Bevorzugte Weiterbildungen sind in den davon abhängigen Ansprüchen definiert.

Die erfindungsgemäße mobile Abfallzerkleinerungsvorrichtung hat insbesondere den Vorteil, dass eine Drehrichtungsänderung der wenigstens einen Zerkleinerungswelle mit dem wenigstens einen Elektromotor erfolgen kann, wodurch ein ansonsten dafür notwendiges Getriebe entfallen kann. Beispielsweise kann ein Elektromotor seine Drehrichtung ändern und auf diese Weise eine Änderung der Drehrichtung der Zerkleinerungswelle bewirken. Alternativ dazu können beispielsweise an einer Zerkleinerungswelle zwei Elektromotoren vorgesehen sein, wobei jeder einzelne Elektromotor die Zerkleinerungswelle nur in eine Drehrichtung betreibt und eine Drehrichtungsänderung durch ein Umschalten von einem zum anderen Elektromotor erfolgt.

Die mobile Abfallzerkleinerungsvorrichtung kann weiterhin umfassen: wenigstens einen AC/DC-Wandler zum Umwandeln von Wechselstrom von dem wenigstens einen Generator in Gleichstrom, einen DC/AC-Wandler zum Umwandeln von Gleichstrom in Wechselstrom für den wenigstens einen Elektromotor, und einen zwischen dem AC/DC-Wandler und dem DC/AC-Wandler angeordneten Zwischenkreis mit einem Energiemanagementmodul zur Ankopplung des Energiespeichers, wobei jeder Elektromotor ein Wechselstrommotor ist.

Die Drehzahl der wenigstens einen Zerkleinerungswelle kann durch den wenigstens einen Elektromotor veränderbar sein. Auf diese Weise kann beispielsweise das Drehmoment des Elektromotors durch Absenken der Drehzahl erhöht werden, um etwa größere Teile vom Inputmaterial zerkleinern zu können und damit ein Verklemmen der wenigstens einen Zerkleinerungswelle möglichst zu verhindern.

Die mobile Abfallzerkleinerungsvorrichtung kann weiterhin umfassen: eine Vorrichtung zur Vermeidung von Überspannungen, vorzugsweise einen Brems-Chopper, insbesondere zur Begrenzung einer Spannung im Zwischenkreis.

Die Steuereinrichtung kann dazu ausgebildet sein den Betrieb des Verbrennungsmotors zu steuern und/oder den Energieflusses zwischen dem wenigstens einen Generator, dem wenigstens einen Elektromotor und dem Energiespeicher zu steuern, wobei insbesondere ein vom Generator nicht verfügbarer Leistungsbetrag für das Antreiben der wenigstens einen Zerkleinerungswelle aus dem Energiespeicher für den Elektromotor bereit gestellt wird, und/oder eine Erhöhung des Drehmoments zu bewirken, insbesondere wird, wenn das Drehmoment für die Zerkleinerung bei einer bestimmten Drehzahl nicht ausreicht, die Elektromotorleistung und somit das Drehmoment angehoben, und falls das Drehmoment dennoch nicht ausreicht, wird die Drehzahl reduziert und so das Drehmoment weiter erhöht, und/oder die dem wenigstens einen Generator maximal entnommene Leistung auf die Nennleistung zu begrenzen, und/oder einen Startvorgang der Abfallzerkleinerungsvorrichtung und das Antreiben der wenigstens einen Zerkleinerungswelle erst dann freizugeben, wenn die Mindestenergiemenge im Energiespeicher enthalten ist, und/oder beim Auftreten von Lasttälern in denen eine Leistungsaufnahme des wenigstens einen Elektromotors unter die Nennleistung des wenigstens einen Generator sinkt, eine Differenz zwischen der Nennleistung und der Leistungsaufnahme des wenigstens einen Elektromotors zum Aufladen des Energiespeichers einzusetzen, und/oder bei einem Bremsvorgang der wenigstens einen Zerkleinerungswelle den wenigstens einen Elektromotor als Generator zu betreiben und die dabei erzeugte Leistung zur Aufladung des Energiespeichers zu verwenden.

Auf diese Weise kann beispielsweise ein vom Generator nicht verfügbarer Leistungsbetrag für das Antreiben der wenigstens einen Zerkleinerungswelle aus dem Energiespeicher für den Elektromotor bezogen werden. Ein Reduzieren der Drehzahl der wenigstens einen Zerkleinerungswelle kann bei Bedarf eine Erhöhung des Drehmoments bewirken.

Gemäß einer anderen Weiterbildung kann der Energiespeicher wenigstens einen elektrischen Energiespeicher und/oder einen mechanischen Energiespeicher umfassen, wobei der elektrische Energiespeicher insbesondere eine wiederaufladbare Batterie und/oder einen Kondensator und/oder einen supraleitender magnetischer Energiespeicher, und/oder eine statische unterbrechungsfreier Stromversorgung, USV, umfassen kann und/oder wobei der mechanische Energiespeicher insbesondere eine dynamische USV und/oder einen Schwungmassespeicher und/oder einen Schwungradspeicher umfassen kann.

Im Falle eines mechanischen Energiespeichers ist vorzugsweise eine Wandlereinrichtung zum Wandeln von elektrischer in mechanische und von mechanischer in elektrische Energie vorgesehen.

In einer Weiterbildung können zwei oder mehr Zerkleinerungswellen mit je einem Elektromotor vorgesehen sein, wobei insbesondere für jeden Elektromotor weiterhin je ein Generator vorgesehen sein kann.

Gemäß einer anderen Weiterbildung kann der Energiespeicher über einen Stromnetzanschluss aufladbar sein. Dies stellt eine zusätzlich Möglichkeit zum Aufladen des Energiespeichers bereit.

Die erfindungsgemäße Aufgabe wird ebenfalls gelöst durch ein Verfahren nach Patentanspruch 10.

Bevorzugte Weiterbildungen sind in den davon abhängigen Ansprüchen definiert.

Das erfindungsgemäße Verfahren zum Betreiben der mobilen Abfallzerkleinerungsvorrichtung umfasst die Schritte: Betreiben des Verbrennungsmotors; Erzeugen von elektrischer Energie mit dem wenigstens einen Generator; Antreiben der wenigstens einen Zerkleinerungswelle mit dem wenigstens einen Elektromotor; Speichern von Energie in dem Energiespeicher, insbesondere bei Leistungsbedarfstälern relativ zu einer Nennleistung des wenigstens einen Generators; wenigstens teilweises Versorgen des wenigstens einen Elektromotors mit elektrischer Energie aus dem Energiespeicher.

Weiterhin kann Umkehren der Drehrichtung der wenigstens einen Zerkleinerungswelle vorgesehen sein. Dadurch können beispielsweise mit Zerkleinerungsgut verklemmte Wellen wieder gelöst werden.

Das erfindungsgemäße Verfahren kann den weiteren Schritt umfassen: Steuern des Energieflusses zwischen dem wenigstens einen Generator, dem wenigstens einen Elektromotor und dem Energiespeicher.

Zudem können ein oder mehrere der folgenden Schritte vorgesehen sein: Steuern des Energieflusses zwischen dem wenigstens einen Generator, dem wenigstens einen Elektromotor und dem Energiespeicher, wobei insbesondere ein vom Generator nicht verfügbarer Leistungsbetrag für das Antreiben der wenigstens einen Zerkleinerungswelle aus dem Energiespeicher für den Elektromotor bereit gestellt wird, und/oder Erhöhen des Drehmoments, insbesondere wird, wenn das Drehmoment für die Zerkleinerung bei einer bestimmten Drehzahl nicht ausreicht, die Elektromotorleistung und somit das Drehmoment angehoben, und falls das Drehmoment dennoch nicht ausreicht, wird die Drehzahl reduziert und so das Drehmoment weiter erhöht, und/oder Begrenzen der dem wenigstens einen Generator maximal entnommenen Leistung auf die Nennleistung, und/oder Starten der Abfallzerkleinerungsvorrichtung wenn eine Mindestenergiemenge im Energiespeicher enthalten ist, und/oder Antreiben der wenigstens einen Zerkleinerungswelle nach dem Startvorgang der Abfallzerkleinerungsvorrichtung wenn die Mindestenergiemenge im Energiespeicher enthalten ist, und/oder Steuern der Energiezufuhr vom Energiespeicher zum wenigstens einen Elektromotor zum Abdecken der über die Nennleistung des wenigstens einen Generators hinausgehenden Leistungsspitzen, und/oder Aufladen des Energiespeichers beim Auftreten von Lasttälern in denen eine Leistungsaufnahme des wenigstens einen Elektromotors unter die Nennleistung des wenigstens einen Generators sinkt, durch Nutzen einer Differenz zwischen der Nennleistung und der Leistungsaufnahme des wenigstens einen Elektromotors, und/oder Betreiben des wenigstens einen Elektromotors als Generator bei einem Bremsvorgang der wenigstens einen Zerkleinerungswelle und Verwenden der dabei erzeugten Leistung zum Aufladen des Energiespeichers.

Das Verfahren kann den folgenden weiteren Schritt umfassen: Umwandeln von Wechselstrom vom wenigstens einen Generator in Gleichstrom, Verwenden wenigstens eines Teils des Gleichstroms zum Speichern von Energie im Energiespeicher, und Umwandeln von Gleichstrom in Wechselstrom zum Versorgen des wenigstens einen in Form eines Wechselstrommotors ausgebildeten Elektromotors mit Energie von dem wenigstens einen Generator und/oder mit Energie aus dem Energiespeicher.

Das Verfahren kann den folgenden weiteren Schritt umfassen: Begrenzen der Spannung, die während eines Bremsvorgangs der wenigstens einen Zerkleinerungswelle durch den als Generator wirkenden wenigstens einen Elektromotor erzeugt wird.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Kurzbeschreibung der Zeichnungen

- Fig. 1: zeigt eine Ausführungsform der erfindungsgemäßen mobilen Abfallzerkleinerungsvorrichtung.
- Fig. 2: zeigt einen Drehmomentvergleich von hydrostatischem zu elektrischem Antrieb.
- Fig. 3: illustriert die Stromspitzenkompensation.

### Ausführungsformen

Aufgabe der Erfindung ist es, eine energetisch effizientere mobile Abfallzerkleinerungsvorrichtung bereitzustellen, wie bereits weiter oben ausgeführt.

Durch die Effizienzsteigerung soll der Einsatz eines kleineren Dieselmotors ermöglicht werden, oder bei gleicher Größe des Dieselmotors, eine Erhöhung der Durchsatzleistung.

Damit soll auch eine Verringerung der CO2 Emissionen erreicht werden, und zwar absolut, wie auch spezifisch bezogen auf den Durchsatz.

Durch die Verbesserung des Wirkungsgrades und der damit verbunden Effizienzsteigerung erfolgt auch eine Reduzierung der Abwärme vom Dieselmotor, wie die Abwärme der Hydraulikpumpe und vom Hydraulikmotor vollständig entfällt, und nur eine geringe Abwärme vom Generator und Elektromotor und vom Energiespeicher anfällt. Dadurch ist eine weitere Effizienzsteigerung möglich, da die Antriebsleistung des Lüfterantriebes der Kühleinrichtung erheblich verringert wird.

Auch der Wirkungsrad des Dieselmotors von 0,35 - 0,4 wird sich mit dem erfindungsgemäßen energieeffizienteren Antrieb sogar verbessern lassen, auch wenn das systembedingt eigentlich nicht möglich erscheint. Das ergibt sich einmal durch die Möglichkeit, mit dem besseren Wirkungsgrad, eine kleinere Type des Dieselmotor wählen zu können. Auch wird der Dieselmotor mit dem erfindungsgemäßen energieeffizienteren Anrieb auch mit konstanterer Leistung betrieben werden können, da die Leistungsspitzen und Leistungstäler durch den Energiespeicher weitgehend ausgeglichen werden, und nur zu einem kleinem Teil den Dieselmotor belasten. Es ist daher mit einer erheblichen spezifischen Verbesserung des Verbrauchs zu rechnen. Der elektrische Wirkungsgrad wird sich von gegenüber dem hydrostatischen Antrieb nach dem derzeitigen Stand der Technik von 0,4 - 0,6, auf 0,8 - 0,9 verbessern lassen, was gemeinsam mit der Verbesserung des Dieselmotor zu einer erheblichen Einsparung von ca. 35 - 45 % beim spezifischen Durchsatz führen wird.

Mit der Umstellung von den hydraulischen zu elektrischen Antriebkomponenten ist eine erhebliche Minderung der Geräuschemissionen von zumindest 5 dB(A) zu erwarten.

Fig. 1 zeigt eine Ausführungsform der erfindungsgemäßen Abfallzerkleinerungsvorrichtung.

Diese erfindungsgemäße mobile Abfallzerkleinerungsvorrichtung 100 umfasst in dieser Ausführungsform: wenigstens eine Zerkleinerungswelle 70, einen Verbrennungsmotor 10, wenigstens einen mit dem Verbrennungsmotor gekoppelten Generator 20 zur Umwandlung von mechanischer Energie des Verbrennungsmotors in elektrische Energie, wenigstens einen mit dieser elektrischen Energie versorgten Elektromotor 30 zum Antreiben der wenigstens einen Zerkleinerungswelle, und bei einer weiteren Möglichkeit der Effizienzsteigerung, einen Energiespeicher 40 zur Speicherung von durch den Generator bei Leistungstälern erzeugter elektrischer Energie, zur Abdeckung der Leistungsspitzen, sowie zur Vermeidung von Überspannungen einen Brems-Chopper 50, wie auch die zum Betrieb aller dieser Komponenten erforderliche Steuerungsanlage 80.

Mit dieser seriellen Hybridantriebslösung kann ein Zerkleinerungssystem mit verbesserten Wirkungsgrad zur Verfügung gestellt werden. Dabei ist es insbesondere von Vorteil, dass ein Elektromotor bereits bei sehr niedrigen Drehzahlen ein hohes Drehmoment aufbringen kann.

Der mit dem Verbrennungsmotor 10 gekoppelte Generator 20 zur Umwandlung von mechanischer Energie des Verbrennungsmotors in elektrische Energie, ist zur Erzeugung von mechanischer Antriebsleistung für eine Zerkleinerungswelle 70 einer mobilen Abfallzerkleinerungsvorrichtung mit einem Elektromotor 30 mit elektrischer Energie vorgesehen.

Für die zwei Zerkleinerungswellen 70 sind zwei Elektromotoren 30 vorgesehen, für jede Zerkleinerungswelle einer, die über ein Untersetzungs- bzw. Synchronisationsgetriebe auch mechanisch verbunden sein können.

Mit dem zusätzlichen Energiespeicher 40 zur Speicherung der vom Generator 20 bei Leerlauf des Zerkleinerers und Leistungsspitzentälern erzeugten elektrischer Energie, kann die so erzeugte elektrische Energie gespeichert werden, und so beim Start und bei Lastspitzen, mit dem Elektromotor 30 der Zerkleinerungswelle 70 als zusätzliche mechanische Energie zugeführt werden.

Als Energiespeicher 40 kommen vorzugsweise wiederaufladbare Kondensatoren, sogenannte SuperCAP, wiederaufladbare Batterien bzw. Akkumulatoren, vorzugsweise auf Basis von Lithium-Ionen Zellen, USV bzw. unterbrechungslosen Stromversorgungen, und elektrische Schwungräder zur Anwendung.

Zur Vermeidung von Überspannungen im System Generator 20 zu Elektromotor 30 und Energiespeicher 40, beim Sofort-Stopp oder Not-Halt des Zerkleinerungssystems und einem Nachlaufen der Zerkleinerungswelle, kann ein sogenannter Brems-Chopper 50 vorgesehen werden. Der Elektromotor 30 wird bei einem Sofort-Stopp oder Not-Halt zum Generator, der dann aufgrund der großen Getriebeübersetzung in einer sehr hohen Drehzahl dreht und so eine hohe Spannung erzeugt. Die so erzeugte hohe Spannung und Energie wird vom Brems-Chopper 50 in Wärme umgesetzt, und schützt so die anderen elektrischen Komponenten vor Beschädigungen.

Der Verbrennungsmotor 10 und der Elektromotor 20 werden in einer seriellen Hybridanordnung vorgesehen, wobei die Zerkleinerungswelle lediglich mit dem Elektromotor 30 antreibbar ist, insbesondere mechanisch nicht direkt mit dem Verbrennungsmotor 10 verbunden ist.

Dies hat den Vorteil einer einfachen Ausgestaltung des Antriebs der Zerkleinerungswelle, wobei der Elektromotor zudem einen möglichst großen Anteil der Leistung des Verbrennungsmotors 10 erhalten kann und entsprechend viel Leistung / Drehmoment auf die Zerkleinerungswelle übertragen kann.

Auf diese Weise können die vom Verbrennungsmotor 10 vorgegebene Drehzahl und die Drehzahl der Zerkleinerungswelle 70 aufeinander abgestimmt werden.

Ein Drehrichtungswechsel bei Blockade der Welle 70 wird dabei nicht über das Getriebe 60 vorgenommen, sondern direkt durch den Elektromotor 30 durch Umpolung in der Steuerung durchgeführt.

Die Getriebeanordnung kann ein erstes Getriebe 11 zur Anpassung des Verhältnisses der Drehzahlen des Verbrennungsmotors und des Generators 20 und/oder ein zweites Getriebe 60 zur Anpassung des Verhältnisses der Drehzahlen des Elektromotors 30 und der Zerkleinerungswelle 70 umfassen.

Die Funktion des Zusammenwirken des Verbrennungsmotors 10 zur Erzeugung der mechanischen Leistung, des Generators 20 zur Erzeugung der elektrischen Energie, und des Elektromotors 30 zur Umwandlung der elektrischen Energie in eine mechanische Leistung zum Antrieb der Zerkleinerungswelle 70, und eines Energiespeichers 40 zum Abdecken der für den Start und der Spitzenlast erforderlichen Leistung, und dem Brems-Shopper 50 zur Vermeidung von Überspannungen und zum raschem Stillstand der Wellen, wird durch eine komplexe Steuerung 80 mit entsprechender Software sicher gestellt.

Beim Start des Verbrennungsmotors 10 wird unmittelbar der Generator 20 in Betrieb gesetzt. Der Generator 20 erzeugt vorzugweise eine Wechselspannung von 400 V und vorzugsweise 50 Hz. Am Generator 20 unmittelbar angebaut oder gesondert angeordnet, ist jeweils ein sogenannter AC/DC Wandler 21 bzw. Frequenzumformer.

Dieser AC/DC Wandler 21 bzw. Frequenzumformer erzeugt eine sogenannte Zwischenkreis als Gleichstrom mit einer Spannung von 200 bis 800 V, vorzugsweise 650 V. Bei mehr als einem Generator 20 wird jedoch nur ein Zwischenkreis gebildet.

An diesen Zwischenkreis ist ein DC/AC Wandler 31 bzw. Frequenzumformer angeschlossen, der den Elektromotor 30 mit elektrischer Energie versorgt, vorzugsweise mit 400 V Wechselspannung, und je nach Drehzahl mit der dazu erforderlichen Frequenz.

Am Zwischenkreis angeschlossen ist bei der energieeffizienteren Ausbildung ein Energiespeicher 40. Der Energiespeicher 40 kann ein Kondensator, eine Batterie bzw. Akkumulator oder elektrischer Schwungradspeicher sein. Wobei unmittelbar vor dem Energiespeicher 40 oder in der Gesamtsteuerung 80, ein entsprechendes Management 41des Energiespeichers für die Be- und Entladung vorgesehen ist.

Auch eine Kombination aus mehreren gleichen, oder mehreren unterschiedlichen Energiespeichern ist möglich. So z.B. ein Batterieenergiespeicher für den Startvorgang des Zerkleinerers, und ein Kondensator für die Abdeckung der Spitzenlast.

Ebenfalls im Zwischenkreis angeschlossen ist der Brems-Chopper 50 zur Vermeidung von Überspannungen im Zwischenkreis, wenn sich bei einem Sofortstopp die Zerkleinerungswelle noch weiter drehen sollte.

Die Funktion dieser Komponenten ist steuerungstechnisch wie folgt vorgesehen: Sobald der Verbrennungsmotor auf Nenndrehzahl ist, vorzugsweise zwischen 1.300 und 2.400 rpm je nach Motorenbauart, wird vom Generator 20 Energie erzeugt, durch die der Elektromotor 30 und somit die Zerkleinerungswelle 70 in Betrieb gesetzt wird.

Beim Start des Elektromotors 30 wird zunächst eine sehr kleine Drehzahl der Zerkleinerungswelle 70 gewählt, um so ein hohes Drehmoment bereit zu stellen. Der Elektromotor 70 wird beim Start nicht nur vom am Verbrennungsmotor 10 angebauten Generator 20 über den Zwischenkreis mit elektrischer Energie versorgt, sondern auch vom Energiespeicher 40.

Die vorzugsweise hier zur Verwendung kommenden Elektromotoren 30 haben die Eigenschaft, dass sie für einen kurzen Zeitraum von z.B. 60 Sekunden in der Lage sind, eine z.B. 50% über der Nennleistung liegende Leistung oder Drehmoment abzugeben.

Dadurch ist es möglich, da diese erhöhte Leistung vom Elektromotor 30 überwiegend nur beim Startvorgang und bei kurzeitiger Spitzenlast erforderlich ist, und von einem Energiespeicher 40 zur Verfügung gestellt wird, den Verbrennungsmotor mit angebauten Generator 20 erheblich kleiner zu wählen, als wenn die für den Startvorgang und Spitzenlast des Zerkleinerers erforderliche Leistung, vollständig vom Verbrennungsmotor bereitgestellt werden müsste.

Nach dem Startvorgang mit sehr niederer Drehzahl der Zerkleinerungswelle 70, hebt die Steuerung je nach Stromaufnahme des Elektromotors 30 die Drehzahl der Welle 70 kontinuierlich an, bis zu der vorgegebenen zulässigen maximalen Drehzahl oder Stromaufnahme. Dadurch wird eine möglichst hohe Zerkleinerungsleistung sichergestellt.

Sollte bei diesem Regelvorgang der Erhöhung der Drehzahl die vorgegebene maximale Stromaufnahme des Motors 30 erreicht werden, nimmt die Steuerung 80 automatisch wieder die Drehzahl bis zur vorgegebenen maximalen Stromaufnahme zurück, und erhöht dadurch das Drehmoment an der Zerkleinerungswelle 70.

Diese andauernde Erhöhung und Minderung der Drehzahl, und somit Herabsetzung und Erhöhung des an die Zerkleinerungswelle 70 abgegebenen Drehmoment, stellt sicher, das immer das für die jeweilige Zerkleinerungsaufgabe optimale Drehmoment bereitgestellt, und so der größtmögliche Durchsatz bei der Zerkleinerung erreicht wird.

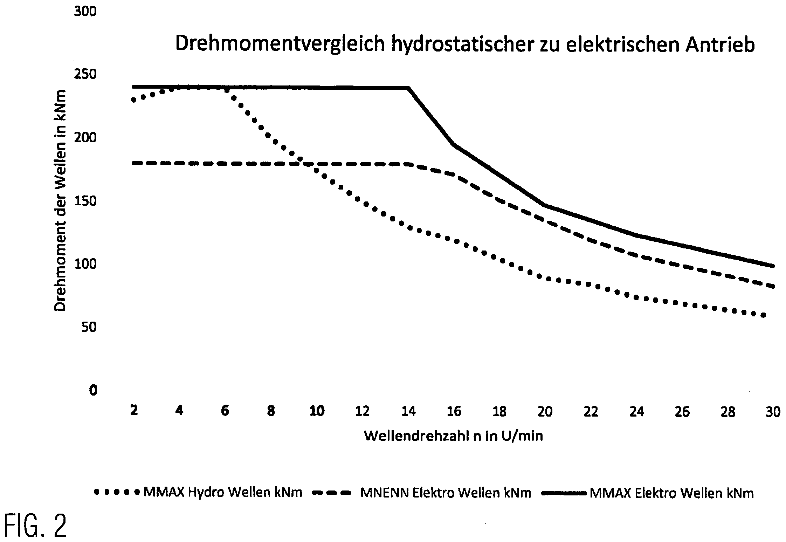

Die Grafik Fig. 2 zeigt diesen Drehmoment- und Drehzahlverlauf in einem Vergleich des hydrostatischen Antriebs, mit dem elektrischen Antrieb. Die punktierte Kurve zeigt den Verlauf nach dem jetzigen Stand der Technik eines hydrostatischen Antriebs. Die unterbrochene Linie gibt den Verlauf bei der Nennleistung des elektrischen Antriebes wieder. Die durchgehende Linie bildet das maximale, kurzfristig zur Verfügung stehende Moment des elektrischen Antriebs ab. Die in der Grafik ersichtlich Begrenzung bei 240kNm ist mechanisch durch das nachfolgende Getriebe bedingt. Die Grafik zeigt deutlich, wie mit der erfindungsgemäßen Ausführung, der hydrostatische Antrieb nach dem Stand der Technik, mit dem elektrischen Antrieb nachgebildet werden kann.

Übergelagert in diesem Regelvorgang der Erhöhung und Minderung der Drehzahl des Elektromotors ist noch, die Bereitstellung zusätzlicher Energie, und somit zusätzlicher Leistung am Elektromotor 30 durch den Energiespeicher 40, beim Auftreten sogenannter Lastspitzen.

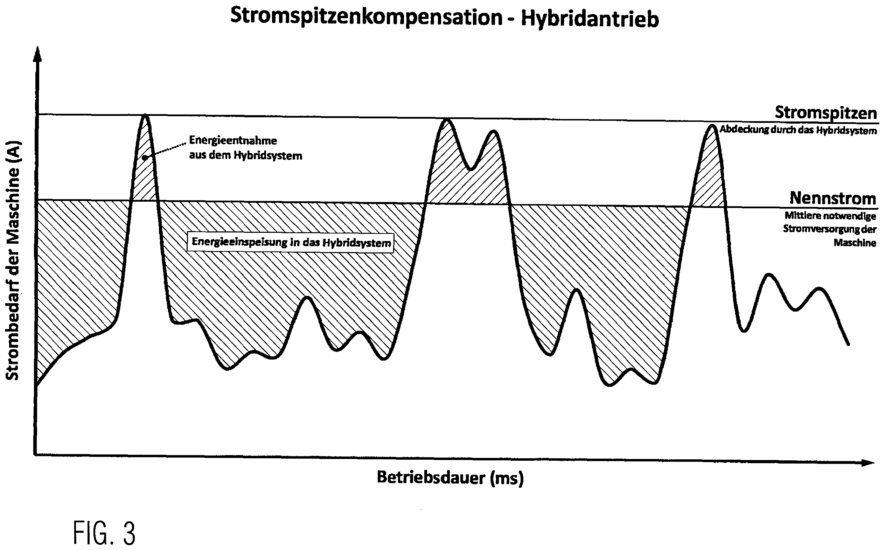

Wie aus der Grafik gemäß Fig. 3 ersichtlich ist, erfolgt der Zerkleinerungsprozess mit stark wechselnden Drehmomenten, und somit stark wechselnden Leistungsaufnahmen des Elektromotors 30. Die Grafik zeigt deutlich sogenannte Lastspitzen und Lasttäler. Bei der erfindungsgemäßen Ausbildung wird die Nennleistung des Systems und somit des Diesel- bzw. Verbrennungsmotors 10 und Generator 20, bevorzugt in der Mitte zwischen den zu erwartenden Lastspitzen und Lasttälern ausgelegt werden.

Bei der energieeffizienteren Variante wird die zur Abdeckung der Lastspitzen erforderliche Energie durch den Energiespeicher 40 zur Verfügung gestellt. Der Verbrennungsmotor 10 und somit der Generator 20 werden dabei bevorzugt im Nennlastbereich betrieben, und die zusätzliche erforderliche Leistung zur Abdeckung der Lastspitzen, wird durch den Energiespeicher 40 aufgebracht.

Da die Lastspitzen nicht durch die Leistung des Systems abgedeckt werden müssen, ist eine kleinere Baugröße der Komponenten Verbrennungsmotor 10 und Generator 20 möglich.

Wenn sich wieder Lasttäler einstellen, wie sie aus Fig. 3 zu entnehmen sind, erfolgt die Wiederaufladung der Energiespeichers 40 über den Generator 20, über die AC/DC Wandler 21 und dem Energiespeicher Management 41 , damit die so gespeicherte Energie für die weitere Abdeckung von Lastspitzen zur Verfügung steht.

Durch die Änderung der Drehrichtung des Elektromotors 30 und somit der Zerkleinerungswellen 70, soll ein sogenanntes Freifahren der Zerkleinerungswellen 70 erreicht werden.

Für die geänderte Drehrichtung der Zerkleinerungswelle 70 wird die entsprechender Drehzahl, maximal zulässige Stromaufnahme des Elektromotors 70 und die Zeitdauer der geänderten Drehrichtung frei wählbar durch die Steuerung 80 vorgegeben, wobei auch der hier oben beschriebene Regelvorgang wie bei normaler Drehrichtung erfolgt.

Sobald die Zeitdauer der geänderten Drehrichtung der Zerkleinerungswelle 70 abgelaufen ist, wird der oben beschriebene Startvorgang für die normale Drehrichtung wieder eingeleitet.

Der in einer weiteren Ausführungsform vorgesehene Brems-Chopper 50, ist ebenso eingebunden in die Steuerungsanlage. Bei einem Sofort-Stopp oder Not-Halt des Zerkleinerungssystems, wird die Stromzufuhr vom Generator zum Elektromotor sofort gestoppt. Da bei nicht allen diesen Zerkleinerungssystemen auszuschließen ist, dass sich die Welle noch nach dem elektrischen Stoppen dreht, wird dieser Brems-Chopper 50 vorgesehen.

Wenn die Welle 70 sich noch nach dem Abschalten der elektrischen Energie noch dreht, wird der Elektromotor 30 zum Generator. Durch die hohe Übersetzung des Getriebes zwischen Elektromotor und Welle, dreht der Elektromotor nunmehr als Generator mit einer sehr hohen Drehzahl. Das bedeutet auch, dass eine sehr hohe Spannung erzeugt wird.

Der Brems-Chopper 50 schützt auf der einen Seite die anderen elektrischen Komponenten des Systems vor Überspannung, und so vor Beschädigungen, wie er anderseits dafür sorgt, dass die Zerkleinerungswelle möglichst unmittelbar nach dem Sofort-Stopp oder Not-Halt zum Stillstand kommt.

Die Zeichnung in Fig. 1 zeigt beispielhaft die Ausführungsform 100 mit zwei Generatoren 20 und zwei Elektromoren70, zwei Zerkleinerungswellen 70 und einem Energiespeicher 40 als Batterie und einem Brems-Chopper 50.

Für das in der Ausführungsform 100 beschriebene erste Getriebe 11, kann auch ein anderes Übertragungs- bzw. Übersetzungselement wie z.B. Keilriemen bzw. Zahnriemen etc. vorgesehen werden. Auch ist vor dem Hauptgetriebe 60 (zweites Getriebe) ein weiteres Getriebe nach den Elektromotoren 30 denkbar. Wie auch hier andere Übertragungs- und Übersetzungselemente vorgesehen werden können. Die Ausbildung als Getriebe bzw. Stirnradgetriebe ist hier nur beispielhaft.

Diese erfindungsgemäße Abfallzerkleinerungsvorrichtung umfasst in dieser Ausführungsform 100, zwei Zerkleinerungswellen 70; einen Verbrennungsmotor (Dieselmotor) 10; zwei mit dem Verbrennungsmotor 10 über ein erstes Getriebe 11 gekoppelte Generatoren 20 zur Umwandlung von mechanischer Energie des Verbrennungsmotors 10 in elektrische Energie; zwei AC/DC Wandler 21 bzw. Frequenzumformer; und zwei Elektromotoren 30 zum Antreiben der Zerkleinerungswelle 70 über ein zweites Getriebe 60, sowie zwei DC/AC Wandler 31 oder Frequenzumformer; einen Energiespeicher als Batterie 40 und das zugehörige Batteriemanagement 41.

Die Generatoren 20 können die erzeugte elektrische Energie, über die beiden AC/DC Wandler 21 bzw. Frequenzumformer, an die Elektromotoren 30 und/oder über das Energiespeichermanagement 41 in den Energiespeicher 40 liefern. Der Energiespeicher kann beispielsweise eine wiederaufladbare Batterie, ein Kondensator, eine unterbrechungsfreie Stromversorgung (USV) oder einen Schwungradspeicher umfassen.

Der Verbrennungsmotor 10 und die Elektromotoren 30 sind in dieser beispielhaften Ausführungsform in einer seriellen Hybridanordnung vorgesehen, wobei die Zerkleinerungswelle 70 lediglich mit dem Elektromotor 30 antreibbar ist, und nicht direkt mit dem Verbrennungsmotor 10.

Das erste Getriebe 11 ist hier als Stirnradgetriebe ausgeführt, um die Drehzahl des Verbrennungsmotors 10 auf eine höhere Drehzahl der Generatoren 20 heraufzusetzen. Mit dem zweiten Getriebe 60 erfolgt eine Herabsetzung der Drehzahl des Elektromotors 30 auf die gewünschte Drehzahl der Zerkleinerungswelle 70. Dies ermöglicht eine kleinere Ausführung des Elektromotors 30, da andern falls - ohne das zweite Getriebe 60 - der Elektromotor 30 ein großes Drehmoment bei vergleichsweise niedrigen Drehzahlen aufbringen müsste, was nur durch eine größere Ausführung des Elektromotors bewirkt werden kann.

Die dargestellten Ausführungsformen sind lediglich beispielhaft und der vollständige Umfang der vorliegenden Erfindung wird durch die Ansprüche definiert.

## Patentansprüche

1. Mobile Abfallzerkleinerungsvorrichtung (100), umfassend:
wenigstens eine Zerkleinerungswelle (70);
einen Verbrennungsmotor (10);
wenigstens einen mit dem Verbrennungsmotor gekoppelten Generator (20) zur Umwandlung von mechanischer Energie des Verbrennungsmotors in elektrische Energie;
einen mit der elektrischen Energie versorgten Elektromotor (30) zum Antreiben und Ändern der Drehrichtung der wenigstens einen Zerkleinerungswelle;
einen Energiespeicher (40) zum Speichern von Energie und zur wenigstens teilweisen Versorgung des Elektromotors mit elektrischer Energie, zum Speichern von Energie bei Leistungsbedarfstälern und zur Abgabe von Energie bei Leistungsbedarfsspitzen relativ zu einer Nennleistung des wenigstens einen Generators; und
eine Steuereinrichtung (80) zum Steuern des Energieflusses zwischen dem wenigstens einen Generator, dem Elektromotor und dem Energiespeicher;
**dadurch gekennzeichnet, dass** die Steuereinrichtung (80) dazu ausgebildet ist, die Energiezufuhr vom Energiespeicher (40) zum Elektromotor (30) zur Abdeckung der über die Nennleistung des wenigstens einen Generators (20) hinausgehenden Leistungsspitzen zu steuern.

2. Mobile Abfallzerkleinerungsvorrichtung nach Anspruch 1, weiterhin umfassend:
wenigstens einen AC/DC-Wandler (21) zum Umwandeln von Wechselstrom von dem wenigstens einen Generator in Gleichstrom, einen DC/AC-Wandler (31) zum Umwandeln von Gleichstrom in Wechselstrom für den Elektromotor, und einen zwischen dem AC/DC-Wandler und dem DC/AC-Wandler angeordneten Zwischenkreis mit einem Energiemanagementmodul (41) zur Ankopplung des Energiespeichers, wobei der Elektromotor ein Wechselstrommotor ist.

3. Mobile Abfallzerkleinerungsvorrichtung nach Anspruch 1 oder 2, wobei die Drehzahl der wenigstens einen Zerkleinerungswelle durch den Elektromotor veränderbar ist.

4. Mobile Abfallzerkleinerungsvorrichtung nach einem der Ansprüche 1 bis 3, weiterhin umfassend:
eine Vorrichtung zur Vermeidung von Überspannungen, vorzugsweise einen Brems-Chopper (50), insbesondere zur Begrenzung einer Spannung im Zwischenkreis.

5. Mobile Abfallzerkleinerungsvorrichtung nach einem der Ansprüche 1 bis 4, wobei die Steuereinrichtung dazu ausgebildet ist,
den Betrieb des Verbrennungsmotors zu steuern, und/oder
den Energiefluss zwischen dem wenigstens einen Generator, dem Elektromotor und dem Energiespeicher zu steuern, wobei insbesondere ein vom Generator nicht verfügbarer Leistungsbetrag für das Antreiben der wenigstens einen Zerkleinerungswelle aus dem Energiespeicher für den Elektromotor bereit gestellt wird, und/oder
eine Erhöhung des Drehmoments zu bewirken, insbesondere wird, wenn das Drehmoment für die Zerkleinerung bei einer bestimmten Drehzahl nicht ausreicht, die Elektromotorleistung und somit das Drehmoment angehoben, und falls das Drehmoment dennoch nicht ausreicht, wird die Drehzahl reduziert und so das Drehmoment weiter erhöht, und/oder
die dem wenigstens einen Generator maximal entnommene Leistung auf die Nennleistung zu begrenzen, und/oder
einen Startvorgang der Abfallzerkleinerungsvorrichtung und das Antreiben der wenigstens einen Zerkleinerungswelle erst dann freizugeben, wenn die Mindestenergiemenge im Energiespeicher enthalten ist, und/oder
beim Auftreten von Lasttälern in denen eine Leistungsaufnahme des Elektromotors unter die Nennleistung des wenigstens einen Generator sinkt, eine Differenz zwischen der Nennleistung und der Leistungsaufnahme des wenigstens einen Elektromotors zum Aufladen des Energiespeichers einzusetzen, und/oder
bei einem Bremsvorgang der wenigstens einen Zerkleinerungswelle den Elektromotor als Generator zu betreiben und die dabei erzeugte Leistung zur Aufladung des Energiespeichers zu verwenden.

6. Mobile Abfallzerkleinerungsvorrichtung nach einem der Ansprüche 1 bis 5, wobei der Energiespeicher wenigstens einen elektrischen Energiespeicher und/oder einen mechanischen Energiespeicher umfasst, wobei der elektrische Energiespeicher insbesondere eine wiederaufladbare Batterie und/oder einen Kondensator und/oder einen supraleitender magnetischer Energiespeicher, und/oder eine statische unterbrechungsfreier Stromversorgung, USV, umfasst und/oder wobei der mechanische Energiespeicher insbesondere eine dynamische USV und/oder einen Schwungmassespeicher und/oder einen Schwungradspeicher umfasst.

7. Mobile Abfallzerkleinerungsvorrichtung nach Anspruch 6, wobei im Falle eines mechanischen Energiespeichers eine Wandlereinrichtung zum Wandeln von elektrischer in mechanische und von mechanischer in elektrische Energie vorgesehen ist.

8. Mobile Abfallzerkleinerungsvorrichtung nach einem der Ansprüche 1 bis 7, wobei zwei oder mehr Zerkleinerungswellen mit je einem Elektromotor vorgesehen sind, wobei insbesondere für jeden Elektromotor weiterhin je ein Generator vorgesehen ist.

9. Mobile Abfallzerkleinerungsvorrichtung, nach einem der Ansprüche 1 bis 8, wobei der Energiespeicher über einen Stromnetzanschluss aufladbar ist.

10. Verfahren zum Betreiben einer mobilen Abfallzerkleinerungsvorrichtung (100), insbesondere einer Abfallzerkleinerungsvorrichtung nach einem der Ansprüche 1 bis 9, wobei die mobile Abfallzerkleinerungsvorrichtung wenigstens eine Zerkleinerungswelle (70), einen Verbrennungsmotor (10), wenigstens einen mit dem Verbrennungsmotor gekoppelten Generator (20), einen Elektromotor (30) und einen Energiespeicher (40) umfasst, wobei das Verfahren die folgenden Schritte umfasst:
Betreiben des Verbrennungsmotors;
Erzeugen von elektrischer Energie mit dem wenigstens einen Generator;
Antreiben der wenigstens einen Zerkleinerungswelle mit dem Elektromotor;
Speichern von Energie in dem Energiespeicher bei Leistungsbedarfstälern relativ zu einer Nennleistung des wenigstens einen Generators;
wenigstens teilweises Versorgen des Elektromotors mit elektrischer Energie aus dem Energiespeicher, insbesondere Versorgen des wenigstens einen Elektromotors mit elektrischer Energie aus dem Energiespeicher zur Abdeckung eines über die Nennleistung des wenigstens einen Generator hinausgehenden Anteils von Leistungsbedarfsspitzen; und
**gekennzeichnet durch** Steuern der Energiezufuhr vom Energiespeicher zum Elektromotor zum Abdecken der über die Nennleistung des wenigstens einen Generators hinausgehenden Leistungsspitzen.

11. Verfahren nach Anspruch 10, mit dem weiteren Schritt:
Umkehren der Drehrichtung der wenigstens einen Zerkleinerungswelle.

12. Verfahren nach Anspruch 10 oder 11, weiterhin umfassend:
Steuern des Energieflusses zwischen dem wenigstens einen Generator, dem Elektromotor und dem Energiespeicher, wobei insbesondere ein vom Generator nicht verfügbarer Leistungsbetrag für das Antreiben der wenigstens einen Zerkleinerungswelle aus dem Energiespeicher für den Elektromotor bereit gestellt wird, und/oder
Erhöhen des Drehmoments, insbesondere wird, wenn das Drehmoment für die Zerkleinerung bei einer bestimmten Drehzahl nicht ausreicht, die Elektromotorleistung und somit das Drehmoment angehoben, und falls das Drehmoment dennoch nicht ausreicht, wird die Drehzahl reduziert und so das Drehmoment weiter erhöht, und/oder
Begrenzen der dem wenigstens einen Generator maximal entnommenen Leistung auf die Nennleistung, und/oder
Starten der Abfallzerkleinerungsvorrichtung wenn eine Mindestenergiemenge im Energiespeicher enthalten ist, und/oder
Antreiben der wenigstens einen Zerkleinerungswelle nach dem Startvorgang der Abfallzerkleinerungsvorrichtung wenn die Mindestenergiemenge im Energiespeicher enthalten ist, und/oder
Aufladen des Energiespeichers beim Auftreten von Lasttälern in denen eine Leistungsaufnahme des Elektromotors unter die Nennleistung des wenigstens einen Generators sinkt, durch Nutzen einer Differenz zwischen der Nennleistung und der Leistungsaufnahme des Elektromotors, und/oder
Betreiben des Elektromotors als Generator bei einem Bremsvorgang der wenigstens einen Zerkleinerungswelle und Verwenden der dabei erzeugten Leistung zum Aufladen des Energiespeichers.

13. Verfahren nach einem der Ansprüche 10 bis 12, mit den weiteren Schritten:
Umwandeln von Wechselstrom vom wenigstens einen Generator in Gleichstrom, Verwenden wenigstens eines Teils des Gleichstroms zum Speichern von Energie im Energiespeicher, und Umwandeln von Gleichstrom in Wechselstrom zum Versorgen des wenigstens einen in Form eines Wechselstrommotors ausgebildeten Elektromotors mit Energie von dem wenigstens einen Generator und/oder mit Energie aus dem Energiespeicher.

14. Verfahren nach einem der Ansprüche 10 bis 12, mit dem weiteren Schritt:
Begrenzen der Spannung, die während eines Bremsvorgangs der wenigstens einen Zerkleinerungswelle durch den als Generator wirkenden Elektromotor erzeugt wird.

## Claims

1. Mobile waste comminuting device (100), comprising:
at least one comminuting shaft (70);
an internal combustion engine (10);
at least one generator (20) that is coupled to the internal combustion engine to convert mechanical energy of the internal combustion engine into electric energy;
an electric motor (30) powered with the electric energy for driving and changing the direction of rotation of the at least one comminuting shaft;
an energy store (40) for storing energy and for at least partly powering the electric motor with electric energy, for storing energy during periods of low power demand and for supplying energy during periods of high power demand relative to the nominal power of the at least one generator; and
a controlling system (80) for controlling the energy flux between the at least one generator, the at least one electric motor and the energy store;
**characterized in that**
the controlling system (80) is configured to control the energy supply from the energy store (40) to the electric motor (30) for covering the load peaks that are beyond the nominal power of the at least one generator (20).

2. Mobile waste comminuting device according to claim 1, furthermore comprising:
at least one AC/DC converter (21) to convert alternating current from the at least one generator into direct current, a DC/AC converter (31) to convert direct current into alternating current for the electric motor, and an intermediate circuit arranged between the AC/DC converter and the DC/AC converter with an energy management module (41) for coupling the energy store, wherein each electric motor is an AC motor.

3. Mobile waste comminuting device according to claim 1 or 2, wherein the speed of the at least one comminuting shaft is changeable by the electric motor.

4. Mobile waste comminuting device according to one of claims 1 to 3, furthermore comprising:
a device for avoiding surge voltages, preferably a brake chopper (50), in particular for restricting a voltage in the intermediate circuit.

5. Mobile waste comminuting device according to one of claims 1 to 4, furthermore comprising a controlling system, wherein the controlling system is configured to
control the operation of the internal combustion engine, and/or
control the energy flux between the at least one generator, the electric motor and the energy store, wherein in particular a power quantity not available from the generator for driving the at least one comminuting shaft is provided from the energy store for the electric motor, and/or
cause an increase of the torque, in particular if the torque for the comminuting at a certain speed is not sufficient, the electric motor power and thus the torque are increased, and if the torque is still not sufficient, the speed is reduced and thus the torque further increased; and/or
restrict the power maximally taken from the at least one generator to the nominal power, and/or
release a starting procedure of the waste comminuting device and the driving of the at least one comminuting shaft only when the minimum energy quantity is contained in the energy store, and/or
if load valleys occur where a power consumption of the electric motor falls below the nominal power of the at least one generator, employ a difference between the nominal power and the power consumption of the at least one electric motor for charging the energy store, and/or
in case of a braking operation of the at least one comminuting shaft, operate the electric motor as a generator and use the power generated in the process for charging the energy store.

6. Mobile waste comminuting device according to one of claims 1 to 5, wherein the energy store comprises at least one electric energy store and/or one mechanical energy store, wherein the electric energy store in particular comprises a rechargeable battery and/or a condenser and/or a superconducting magnetic energy store, and/or a static, uninterruptable power supply (UPS), and/or wherein the mechanical energy store in particular comprises a dynamic UPS and/or a centrifugal mass store and/or a flywheel store.

7. Mobile waste comminuting device according to claim 6, wherein in case of a mechanical energy store, a converter device to convert electric into mechanical and mechanical into electric energy is provided.

8. Mobile waste comminuting device according to one of claims 1 to 7, wherein two or more comminuting shafts are provided with one electric motor each, wherein furthermore in particular one generator each is provided for each electric motor.

9. Mobile waste comminuting device according to one of claims 1 to 8, wherein the energy store is chargeable via a mains connection.

10. Method of operating a mobile waste comminuting device (100), in particular a waste comminuting device according to one of claims 1 to 9, wherein the mobile waste comminuting device comprises at least one comminuting shaft (70), an internal combustion engine (10), at least one generator (20) that is coupled to the internal combustion engine, an electric motor (30) and one energy store (40), wherein the method comprises the following steps:
operating the internal combustion engine;
generating electric energy with the at least one generator;
driving the at least one comminuting shaft with the electric motor;
storing energy in the energy store during periods of low power demand relative to a nominal power of the at least one generator;
at least partly powering the electric motor with electric energy from the energy store, in particular powering the at least one electric motor with electric energy from the energy store for covering a portion of periods of high power demand going beyond the nominal power of the at least one generator; and
**characterized by**
controlling the energy supply from the energy store to the at least one electric motor for covering the load peaks that are beyond the nominal power of the at least one generator.

11. Method according to claim 10, comprising the further step of:
reversing the direction of rotation of the at least one comminuting shaft.

12. Method according to claim 10 or 11, furthermore comprising:
controlling the energy flux between the at least one generator, the electric motor and the energy store, wherein in particular a power quantity not available from the generator for driving the at least one comminuting shaft is provided from the energy store for the electric motor, and/or
increasing the torque, in particular if the torque for comminuting at a certain speed is not sufficient, the electric motor power and thus the torque are increased, and if the torque is still not sufficient, the speed is reduced and thus the torque further increased, and/or restricting the power maximally taken from the at least one generator to the nominal power, and/or
starting the waste comminuting device if a minimum energy quantity is contained in the energy store, and/or
driving the at least one comminuting shaft after the starting procedure of the waste comminuting device if the minimum energy amount is contained in the energy store, and/or
charging the energy store if load valleys occur where a power consumption of the electric motor falls below the nominal power of the at least one generator, by utilizing a difference between the nominal power and the power consumption of the electric motor, and/or
operating the electric motor as a generator in case of a braking operation of the at least one comminuting shaft and using the power generated thereby for charging the energy store.

13. Method according to one of claims 10 to 12, comprising the further steps of:
converting the alternating current from the at least one generator into direct current, using at least a portion of the direct current for storing energy in the energy store, and converting direct current into alternating current for supplying the at least one electric motor embodied in the form of an alternating current motor with energy from the at least one generator and/or with energy from the energy store.

14. Method according to one of claims 10 to 12, comprising the further step of:
restricting the voltage generated during a braking operation of the at least one comminuting shaft by the electric motor acting as a generator.

## Revendications

1. Broyeur de déchets mobile (100), comprenant :
au moins un arbre de broyage (70) ;
un moteur à combustion interne (10) ;
au moins un générateur (20) couplé au moteur à combustion interne afin de convertir l'énergie mécanique du moteur à combustion interne en énergie électrique ;
un moteur électrique (30) alimenté avec l'énergie électrique pour entraîner et modifier le sens de rotation du au moins un arbre de broyage ;
un accumulateur d'énergie (40) permettant d'accumuler de l'énergie et d'alimenter au moins partiellement le moteur électrique en énergie électrique, d'accumuler de l'énergie lors de creux de demande en puissance et de fournir de l'énergie lors de pics de demande de puissance par rapport à une puissance nominale du au moins un générateur ; et
un dispositif de commande (80) permettant de commander le flux d'énergie entre le au moins un générateur, le moteur électrique et l'accumulateur d'énergie ;
**caractérisé en ce que**
le dispositif de commande (80) est conçu pour commander l'apport d'énergie de l'accumulateur d'énergie (40) au moteur électrique (30) afin de couvrir les pics de puissance dépassant la puissance nominale du au moins un générateur (20).

2. Broyeur de déchets mobile selon la revendication 1, comprenant en outre : au moins un convertisseur CA/CC (21) permettant de convertir le courant alternatif de la au moins une génératrice en courant continu, un convertisseur CC/CA (31) permettant de convertir le courant continu en courant alternatif pour le moteur électrique, et un circuit intermédiaire agencé entre le convertisseur CA/CC et le convertisseur CC/CA et muni d'un module de gestion d'énergie (41) permettant de coupler l'accumulateur d'énergie, dans lequel le moteur électrique est un moteur à courant alternatif.

3. Broyeur de déchets mobile selon la revendication 1 ou 2, dans lequel la vitesse de rotation du au moins un arbre de broyage peut être modifiée par le moteur électrique.

4. Broyeur de déchets mobile selon l'une quelconque des revendications 1 à 3, comprenant en outre :
un dispositif pour éviter les surtensions, de préférence un frein-hacheur (50), en particulier pour limiter une tension dans un circuit intermédiaire.

5. Broyeur de déchets mobile selon l'une quelconque des revendications 1 à 4, dans lequel le dispositif de commande est conçu pour
commander le fonctionnement du moteur à combustion interne, et/ou commander le flux d'énergie entre le au moins un générateur, le moteur électrique et l'accumulateur d'énergie, dans lequel en particulier une quantité de puissance non disponible depuis le générateur est fournie pour entraîner le au moins un arbre de broyage à partir de l'accumulateur d'énergie pour le moteur électrique, et/ou provoquer une augmentation du couple, en particulier lorsque le couple de broyage est insuffisant à une certaine vitesse, la puissance du moteur électrique et donc le couple sont augmentés, et si le couple est toujours insuffisant, la vitesse est réduite et le couple est encore augmenté, et/ou
limiter la puissance maximale prélevée sur le au moins un générateur à la puissance nominale, et/ou
ne libérer un processus de démarrage du broyeur de déchets et l'entraînement du au moins un arbre de broyage que lorsque la quantité minimale d'énergie est contenue dans l'accumulateur d'énergie, et/ou
lors de l'apparition de pics de charge dans lesquels une consommation de puissance du moteur électrique tombe en dessous de la puissance nominale du au moins un générateur, utiliser une différence entre la puissance nominale et la consommation de puissance du au moins un moteur électrique pour charger l'accumulateur d'énergie, et/ou
lors d'un processus de freinage d'au moins un arbre de broyage, faire fonctionner le moteur électrique en tant que générateur et utiliser la puissance générée pour charger l'accumulateur d'énergie.

6. Broyeur de déchets mobile selon la revendication 1 ou 5, dans lequel l'accumulateur d'énergie comprend au moins un accumulateur d'énergie électrique et/ou un accumulateur d'énergie mécanique, dans lequel l'accumulateur d'énergie électrique comprend en particulier une batterie rechargeable et/ou un condensateur et/ou un accumulateur d'énergie magnétique supraconducteur, et/ou une alimentation statique sans coupures (ASSC) et/ou dans lequel l'accumulateur d'énergie mécanique comprend en particulier une ASSC dynamique et/ou un accumulateur à masse d'inertie et/ou un accumulateur à volant d'inertie.

7. Broyeur de déchets mobile selon la revendication 6, dans lequel, dans le cas d'un accumulateur d'énergie mécanique, un dispositif de conversion est prévu pour convertir de l'énergie électrique en énergie mécanique et de l'énergie mécanique en énergie électrique.

8. Broyeur de déchets mobile selon l'une quelconque des revendications 1 à 7, dans lequel deux arbres de broyage ou plus avec chacun un moteur électrique sont prévus, dans lequel, en particulier, un générateur est également prévu pour chaque moteur électrique.

9. Broyeur de déchets mobile selon l'une quelconque des revendications 1 à 8, dans lequel l'accumulateur d'énergie peut être chargé via un raccordement au réseau électrique.

10. Procédé pour faire fonctionner un broyeur de déchets mobile (100), en particulier un broyeur de déchets selon l'une quelconque des revendications 1 à 9, dans lequel le broyeur de déchets mobile comprend au moins un arbre de broyage (70), un moteur à combustion interne (10), au moins un générateur (20) couplé au moteur à combustion interne, un moteur électrique (30) et un accumulateur d'énergie (40), le procédé comprenant les étapes consistant à :
faire fonctionner le moteur à combustion interne ;
générer de l'énergie électrique à l'aide du au moins un générateur ;
entraîner le au moins un arbre de broyage à l'aide du moteur électrique ;
stocker de l'énergie dans l'accumulateur d'énergie pour les pics de demande de puissance par rapport à une puissance nominale du au moins un générateur ;
alimenter au moins partiellement le moteur électrique en énergie électrique provenant de l'accumulateur d'énergie, en particulier alimenter les au moins un moteur électrique en énergie électrique provenant de l'accumulateur d'énergie pour couvrir une partie des pics de demande de puissance dépassant la puissance nominale du au moins un générateur ; et
**caractérisé par** l'étape consistant à
commander l'alimentation en énergie de l'accumulateur d'énergie au moteur électrique pour couvrir les pics de puissance dépassant la puissance nominale du au moins un générateur.

11. Procédé selon la revendication 10, comprenant en outre l'étape consistant à: inverser le sens de rotation du au moins un arbre de broyage.

12. Procédé selon la revendication 10 ou 11, comprenant en outre les étapes consistant à :
commander le flux d'énergie entre le au moins un générateur, le moteur électrique et l'accumulateur d'énergie, dans lequel en particulier une quantité de puissance non disponible depuis le générateur est fournie pour entraîner le au moins un arbre de broyage à partir de l'accumulateur d'énergie pour le moteur électrique, et/ou augmenter le couple, en particulier lorsque le couple de broyage est insuffisant à une certaine vitesse, la puissance du moteur électrique et donc le couple sont augmentés, et si le couple est toujours insuffisant, la vitesse est réduite et le couple est encore augmenté, et/ou
limiter la puissance maximale prélevée sur le au moins un générateur à la puissance nominale, et/ou
démarrer le broyeur de déchets lorsqu'une quantité minimale d'énergie est contenue dans l'accumulateur d'énergie, et/ou
entraîner le au moins un arbre de broyage après le processus de démarrage du broyeur des déchets lorsque la quantité minimale d'énergie est contenue dans l'accumulateur d'énergie, et/ou
charger l'accumulateur d'énergie lors de l'apparition de pics de charge dans lesquels une consommation de puissance du moteur électrique tombe en dessous de la puissance nominale du au moins un générateur, en utilisant une différence entre la puissance nominale et la consommation de puissance du moteur électrique, et/ou
faire fonctionner le moteur électrique en tant que générateur lors d'un processus de freinage du au moins un arbre de broyage et utiliser la puissance générée pour charger l'accumulateur d'énergie.

13. Procédé selon l'une quelconque des revendications 10 à 12, comprenant les étapes supplémentaire consistant à :
convertir le courant alternatif d'au moins un générateur en courant continu, utiliser au moins une partie du courant continu pour accumuler de l'énergie dans l'accumulateur d'énergie, et convertir le courant continu en courant alternatif pour alimenter le au moins un moteur électrique, conçu sous la forme d'un moteur à courant alternatif, en énergie provenant du au moins un générateur et/ou en énergie provenant de l'accumulateur d'énergie.

14. Procédé selon l'une quelconque des revendications 10 à 12, comprenant l'étape supplémentaire consistant à :
limiter la tension qui est générée pendant un processus de freinage du au moins un arbre de broyage par le moteur électrique agissant comme un générateur.
